Europäisches Patentamt

European Patent Office

Office européen des brevets

(11) EP 0 834 578 A1

(19)

(12) EUROPÄISCHE PATENTANMELDUNG

(43) Veröffentlichungstag:
08.04.1998 Patentblatt 1998/15

(51) Int. Cl.6: C21C 5/00, C21C 7/00

(21) Anmeldenummer: 97116217.7

(22) Anmeldetag: 18.09.1997

(84) Benannte Vertragsstaaten:
AT BE CH DE DK ES FI FR GB GR IE IT LI LU MC
NL PT SE

(30) Priorität: 27.09.1996 DE 19641383

(71) Anmelder: Hanke, Klause-Jürgen
47057 Duisburg (DE)

(72) Erfinder:
• Hanke, Klaus-Jürgen
47057 Duisburg (DE)
• Braun, Uwe, Dr.
47259 Duisburg (DE)

(74) Vertreter:
Staudt, Hans-Peter, Dipl.-Ing. et al
Harderstrasse 39
85049 Ingolstadt (DE)

(54) **Verfahren zur Herstellung von Stahlgüten mit einem Silizium-Gehalt kleiner gleich 0,08 Gewichtsprozent**

(57) Ein Verfahren zur Herstellung von Stahlgüten mit einem Silizium-Gehalt kleiner gleich 0,08 Gewichtsprozent enthält Maßnahmen, die die Verflüssigung einer Pfannenschlacke zur verbesserten Aufnahme und Abscheidung von Tonerde und tonerdereichen Mischoxiden fördern. Diese Maßnahmen beinhalten a) Erhöhen der Pfannenschlackentemperatur über einen zusätzlichen Abbrand an Aluminium und /oder Silizium und /oder Kalzium durch gezielt eingestellte höhere Gehalte an gelöstem Sauerstoff beim Frischprozeß im Konverter und/oder durch Zugabe von gebundenem Sauerstoff, b) Verändern der analytischen Zusammensetzung der sekundärmetallurgischen Pfannenschlacke dahingehend, daß ihr Schmelzpunkt durch eine Erhöhung ihres $SiO_2$-Gehaltes durch Zugabe von $SiO_2$ erniedrigt wird, und c) Verlängern der Spülbehandlung, wobei die Dauer der Spülbehandlung so zu bemessen ist, daß beim Ansteigen des Siliziumgehaltes im Stahl durch Reduktion von $SiO_2$ oder durch Zugabe von Siliziumträgern die Silizium-Obergrenze der Stahlgüte nicht überschritten wird, wobei die Maßnahmen a) bis c) einzeln oder in beliebigen Kombinationen getroffen werden können.

EP 0 834 578 A1

**Beschreibung**

Die Erfindung betrifft ein Verfahren zur Herstellung von Stahlgüten mit einem Silizium-Gehalt kleiner gleich 0,08 Gewichtsprozent, insbesondere Verfahren zur Herstellung von Stahlgüten mit einer vorgeschriebenen niedrigen Silizium-Obergrenze von 0,02 %, 0,03 %, 0,04 %, 0,05 % oder 0,06 % und mit hohem Reinheitsgrad.

Stahlgüten mit festgelegten Obergrenzen des Silizium-Gehaltes von 0,08 Gewichtsprozent bis herunter zu Werten von 0,02 Gewichtsprozent sind entwickelt worden, um bestimmte, im wesentlichen vom Silizium-Gehalt des Stahles abhängende technologische Eigenschaften, z. B. seine Eignung zum Verzinken, sicherzustellen. Hierbei handelt es sich vorzugsweise um Stahlgüten mit hohem Reinheitsgrad, wobei der Reinheitsgrad z.B. als Verhältnis der Fläche oxidischer bzw. sulfidischer Komponenten zur Gesamtfläche eines Schliffbildes oder auch als Zählgröße der Anzahl nichtmetallischer Einschlüsse definierter Größe pro Flächeneinheit bestimmbar ist.

Bei der Herstellung solcher Stähle wird bislang darauf geachtet, daß kein Silizium z. B. durch siliziumhaltige Legierungen in die Schmelze eingebracht wird. Um darüber hinaus die Reduktion von Silizium aus Kieselsäure möglichst zu vermeiden, wird zudem darauf geachtet, das Einbringen von Kieselsäure in die Pfannenschlacke möglichst gering zu halten.

Ein bekanntes Verfahren zur Herstellung von Stahl der oben genannten Gütegruppe beinhaltet als Verfahrensschritte die konventionelle Erschmelzung von Rohstahl im Konverter, den anschließenden Abstich in eine Stahlgießpfanne und die darauf folgenden sekundärmetallurgischen Behandlungsschritte wie Legieren, Desoxidation mit Aluminium, Einstellen der Gießtemperatur, Spülbehandlung mit Argon und anschließendem Reinheitsgradspülen und gegebenenfalls eine Vakuumbehandlung. Die genannten sekundärmetallurgischen Behandlungsschritte werden dabei unter basischen Pfannenschlacken durchgeführt, die durch die Zugabe von Kalk, Flußspat und Tonerde gebildet werden.

Eine weitere bekannte Verfahrensvariante besteht darin, die genannten sekundärmetallurgischen Behandlungsschritte unter Verzicht auf die Zugabe schlackenbildender Komponenten durchzuführen.

Ein dem vorstehenden entsprechendes Verfahren ist beispielsweise offenbart in der Veröffentlichung von J. Lilja und A. Lindstedt in Scaninject VII, 7th International Conference of Refining Processes, Lulea, Schweden, June 7-8, 1995, Vol.I (1995) Lulea, MEFOS, S. 309 - 327.

Die mit den zuvor erläuterten Verfahren erstellten Stahlgüten genügen in vielen Fällen nicht den Anforderungen bezüglich des Reinheitsgrades. Darüber hinaus sind die nach den bekannten Verfahren hergestellten Stahlgüten in Bezug auf ihre Vergießbarkeit als vergleichsweise problematisch einzustufen.

Aufgabe der Erfindung ist es, ein Verfahren zur Herstellung von Stahlgüten mit einem Silizium-Gehalt kleiner gleich 0,08 Gewichtsprozent bereitzustellen, die im Vergleich zu solchen Stahlgüten, die nach dem Stand der Technik hergestellt werden, einen höheren Reinheitsgrad und eine bessere Vergießbarkeit aufweisen.

Die Lösung dieser Aufgabe ist im Patentanspruch 1 angegeben. Demzufolge weist das erfindungsgemäße Verfahren zur Herstellung von Stahlgüten mit einem Silizium-Gehalt kleiner gleich 0,08 Gewichtsprozent einzeln oder in beliebigen Kombinationen die folgenden Maßnahmen auf:

a) Erhöhen der Pfannenschlackentemperatur über einen zusätzlichen Abbrand an Aluminium und /oder Silizium und /oder Kalzium durch gezielt eingestellte höhere Gehalte an gelöstem Sauerstoff beim Frischprozeß im Konverter und/oder durch Zugabe von gebundenem Sauerstoff,

b) Verändern der analytischen Zusammensetzung der sekundärmetallurgischen Pfannenschlacke dahingehend, daß ihr Schmelzpunkt durch eine Erhöhung ihres $SiO_2$-Gehaltes durch Zugabe von $SiO_2$ und/oder von Siliziumträgern erniedrigt wird,

c) Verlängern der Spülbehandlung, wobei die Dauer der Spülbehandlung so zu bemessen ist, daß beim Ansteigen des Siliziumgehaltes im Stahl durch Reduktion von $SiO_2$ oder durch Zugabe von Siliziumträgern die Silizium-Obergrenze der Stahlgüte nicht überschritten wird,
wodurch die Verflüssigung einer Pfannenschlacke zur verbesserten Aufnahme und Abscheidung von Tonerde und tonerdereichen Mischoxiden gefördert wird. Dieses Verfahren ist besonders vorteilhaft bei der Herstellung von Stahlgüten mit hohem Reinheitsgrad.

Vorteilhafte Ausgestaltungen der Erfindung sind in den Unteransprüchen angegeben.

Der Sauerstoffgehalt liegt vorzugsweise bei größer gleich 600 ppm $O_2$, besonders bevorzugt im Bereich größer gleich 700 ppm $O_2$ und kann Werte von deutlich mehr als größer gleich 1300 ppm $O_2$ annehmen, jeweils gemessen als Sauerstoffwert der EMK-Messung vor Vakuum bzw vor der Desoxidation. Für einen Siliziumgehalt von 0,04 Gewichtsprozent kann die Häufigkeit als gut bewerteter Schmelzen von weniger als 20 Prozent einer bestimmten Fallzahl bei einem Sauerstoffgehalt vor Vakuum kleiner 500 ppm beispielsweise auf über 90 Prozent bei einem Sauerstoffgehalt größer gleich 700 ppm vor Vakuum gesteigert werden.

Die beim Stand der Technik auftretenden nachteiligen Phänomene, d.h. schlechter Reinheitsgrad und schwierige Vergießbarkeit werden insbesondere durch tonerdehaltige Mischoxide verursacht. Diese oxidischen Verbindungen entstehen durch Desoxidationsreaktionen und Entschwefelungsreaktionen, die jeweils sowohl an der Phasengrenze Metallbad-Schlacke als auch innerhalb des Metallbades ohne unmittelbaren Schlakkenphasenkontakt ablaufen und durch Abbrand insbesondere von Aluminium durch Wechselwirkungen zwischen Stahl und Feuerfestzustellung und Stahl und Luftsauerstoff.

Die oxidreichen Verbindungen werden dann zum Problem, wenn sie nicht im flüssigen Stahl in die Schlackenphase aufsteigen oder, im Falle ihrer Entstehung an der Phasengrenze Metall - Schlacke, nicht geneigt sind, in die Schlackenphase überzutreten. In beiden Fällen kommt es zwangsläufig im nachfolgenden Ablauf dazu, daß die oxidischen Verbindungen entweder bis zur Erstarrung des Stahles in der Metallphase verbleiben und dann als Einschlüsse die Werkstoffeigenschaften negativ beeinflussen, oder sich vorher an den für den Gießvorgang kritischen Stellen wie Pfannenausguß, Tauchausguß und Verteilerstopfen ablagern, was erhebliche Probleme beim Gießvorgang zur Folge hat.

Basierend auf diesen Erkenntnissen enthält das erfindungsgemäße Verfahren Maßnahmen, die das Auftreten der technologisch nachteiligen Phänomene verringern und die Neigung zum Aufsteigen der oxidischen Verbindungen sowie ihr Übertreten in die Schlackenphase fördern.

Beides kann durch eine frühzeitig flüssige, reaktive sekundärmetallurgische Schlacke in Kombination mit definierten Silizium-Gehalten in der Stahlschmelze erreicht werden.

Mit anderen Worten, die Erfindung basiert auf der Erkenntnis der vorstehend erläuterten physikalischen Zusammenhänge und beinhaltet das Konzept, die Pfannenschlacke, insbesondere den als Schlackenbildner zugegebenen Kalk, in einem höheren Grad als bei herkömmlicher Arbeitsweise zu verflüssigen und so die Fähigkeit der Schlacke zur Aufnahme und Lösung von tonerdereichen Mischoxiden zu verbessern.

Eine Möglichkeit hierzu besteht darin, entgegen der bislang geltenden Lehrmeinung und Praxis einen definiert hohen Abbrand von Aluminium und/oder Silizium und/oder Kalzium einzustellen, wobei bei einer Silizium-Zugabe vor der Aluminiumdesoxidation es zu einem erhöhten Silizium-Abbrand kommt. Dieser erhöhte Abbrand an Aluminium und/oder Silizium und/oder Kalzium führt bei gleichzeitig höher eingestellten Gehalten an gelöstem Sauerstoff beim Frischprozeß im Konverter zu einer höheren Pfannenschlackentemperatur, so daß die temperaturabhängigen Parameter wie Viskosität und Grenzflächenspannung verringert werden. Infolgedessen wird der Übergang der Desoxidationsprodukte in die Schlackenphase und deren Lösung in ihr begünstigt. Diese Minderung der Desoxidationsprodukte im Metallbad führt zu einem höheren Reinheitsgrad sowie zu einer besseren Vergießbarkeit.

Anders ausgedrückt: Der erhöhte Abbrand an Aluminium und/oder Silizium und/oder Kalzium führt zu einer höheren Pfannenschlackentemperatur, so daß zum frühestmöglichen Zeitpunkt eine flüssige reaktive Schlackenphase definierter Zusammensetzung mit verringerten Werten der temperaturabhängigen Parameter wie Viskosität und Oberflächenspannung bereitsteht. Infolgedessen wird der Übergang der Desoxidationsprodukte in die Schlackenphase begünstigt und die notwendige Reduktion der Schlacke beschleunigt. Die dazu benötigten Schlacken liegen im System CaO-$Al_2O_3$-MgO-$SiO_2$ als Hauptkomponenten.

Die höheren Gehalte an gelöstem Sauerstoff sind auch durch eine Zugabe von gebundenem Sauerstoff erzielbar. Zweckmäßigerweise werden dazu durch Silizium oder Aluminium reduzierbare Sauerstoffträger wie Erz, Sinter, Pellets, $FeO_n$-haltige Schlacke, flüssige heiße LD-Schlacke in die Stahlgießpfanne zugegeben. Gute Werte werden dann erreicht, wenn der Sauerstoffgehalt vor der Desoxidation mindestens 600 ppm beträgt.

Die eingangs erläuterte Verfahrensweise kann noch verbessert werden, wenn die Spülgasbehandlung durchgeführt wird bis zur Einstellung des Silizium-Gehaltes möglichst nahe der durch die Soll-Analyse vorgegebenen Obergrenze. Alternativ kann diese Obergrenze durch Zugabe von Siliziumträgern erreicht werden. Die Silizium-Obergrenze liegt vorzugsweise bei $\geq$ 0,025 Gew.%.

Anhand eines Ausführungsbeispieles wird das erfindungsgemäße Verfahren näher erläutert.

Anhand der Umsatzgleichung:

$$Fe_2O_3 + 2Al \Leftrightarrow Al_2O_3 + 2Fe$$

wird die entstehende Reaktionswärme bei 1873 K mit -774531,1 J $mol^{-1}$ gerechnet. Die Zugabe von 300 kg $Fe_2O_3$ (n = 1875 mol) und entsprechend 100 kg Aluminium zu einer bestehenden Schlackenphase ergeben somit eine Reaktionswärme von Q = -1452*$10^6$ J. Bei einer kalkaluminatischen Pfannenschlacke von z.B. 4000 kg mit einem angenommenen $c_p$-Wert von 1,3 KJ $kg^{-1}$ $K^{-1}$ ergibt sich dann ohne Berücksichtigung des Wärmetausches Schlacke/Metall eine theoretische Erhöhung der Schlackentemperatur von ca. 280 K gemäß der Gleichung:

$$\Delta T = \frac{Q}{C_p * m}$$

**Patentansprüche**

1.  Verfahren zur Herstellung von Stahlgüten mit einem Silizium-Gehalt kleiner gleich 0,08 Gewichtsprozent, bei dem die Verflüssigung einer Pfannenschlacke zur verbesserten Aufnahme und Abscheidung von Tonerde und tonerdereichen Mischoxiden mittels der nachfolgenden Maßnahmen gefördert wird:

a) Erhöhen der Pfannenschlackentemperatur über einen zusätzlichen Abbrand an Aluminium und /oder Silizium und /oder Kalzium durch gezielt eingestellte höhere Gehalte an gelöstem Sauerstoff beim Frischprozeß im Konverter und/oder durch Zugabe von gebundenem Sauerstoff,

b) Verändern der analytischen Zusammensetzung der sekundärmetallurgischen Pfannenschlacke dahingehend, daß ihr Schmelzpunkt durch eine Erhöhung ihres $SiO_2$-Gehaltes durch Zugabe von $SiO_2$ erniedrigt wird,

c) Verlängern der Spülbehandlung, wobei die Dauer der Spülbehandlung so zu bemessen ist, daß beim Ansteigen des Siliziumgehaltes im Stahl durch Reduktion von $SiO_2$ oder durch Zugabe von Siliziumträgern die Silizium-Obergrenze der Stahlgüte nicht überschritten wird, wobei die Maßnahmen a) bis c) einzeln oder in beliebigen Kombinationen getroffen werden können.

2. Verfahren nach Anspruch 1, dadurch gekennzeichnet, daß die Dauer der Spülbehandlung so bemessen wird, das der Siliziumgehalt an der vorgegebenen Obergrenze liegt.

3. Verfahren nach Anspruch 1, dadurch gekennzeichnet, daß die Siliziumobergrenze bei ≥ 0,025 Gew.% liegt.

4. Verfahren nach Anspruch 1, dadurch gekennzeichnet, daß die Zugabe von gebundenem Sauerstoff durch das Einbringen von durch Silizium und/oder Aluminium reduzierbaren Sauerstoffträgern in die Gießpfanne erfolgt.

5. Verfahren nach Anspruch 4, dadurch gekennzeichnet, daß der Sauerstoffträger kalte oder flüssige heiße LD-Schlacke ist.

6. Verfahren nach einem der vorstehenden Ansprüche, dadurch gekennzeichnet, daß der Sauerstoffgehalt vor der Desoxidation mindestens 600 ppm beträgt.

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | EP 0 352 254 A (VOEST ALPINE STAHL DONAWITZ) 24.Januar 1990 --- | | C21C5/00 C21C7/00 |
| A | RICHTER H ET AL: "PROZESSSTEUERUNG SEKUNDARMETALLURGISCHER VERFAHREN" STAHL UND EISEN, Bd. 114, Nr. 11, 7.November 1994, Seite I 10, 13 XP000484921 --- | | |
| A | PATENT ABSTRACTS OF JAPAN vol. 008, no. 199 (C-242), 12.September 1984 & JP 59 089708 A (SHIN NIPPON SEITETSU KK), 24.Mai 1984, * Zusammenfassung * --- | | |
| A | US 5 529 810 A (SUGAWARA NORIAKI) 25.Juni 1996 ----- | | |

| RECHERCHIERTE SACHGEBIETE (Int.Cl.6) |
|---|
| C21C C23C |

Der vorliegende Recherchenbericht wurde für alle Patentansprüche erstellt

| Recherchenort | Abschlußdatum der Recherche | Prüfer |
|---|---|---|
| DEN HAAG | 9.Januar 1998 | Oberwalleney, R |

EPO FORM 1503 03 82 (P04C03)